Europäisches Patentamt

European Patent Office

Office européen des brevets

(19)

(11) Veröffentlichungsnummer : **0 585 594 B1**

(12) **EUROPÄISCHE PATENTSCHRIFT**

(45) Veröffentlichungstag der Patentschrift :
**19.10.94 Patentblatt 94/42**

(21) Anmeldenummer : **93111831.9**

(22) Anmeldetag : **24.07.93**

(51) Int. Cl.⁵ : **G01D 9/00,** G01D 15/00,
G06K 15/22, G01D 9/30

(54) **Kurvenschreibgerät mit elektronischem Anzeigedisplay.**

(30) Priorität : **14.08.92 EP 92710023**

(43) Veröffentlichungstag der Anmeldung :
**09.03.94 Patentblatt 94/10**

(45) Bekanntmachung des Hinweises auf die
Patenterteilung :
**19.10.94 Patentblatt 94/42**

(84) Benannte Vertragsstaaten :
**AT BE CH DE FR GB IT LI**

(56) Entgegenhaltungen :
**DE-A- 3 004 555**
**FR-A- 2 422 145**
**US-A- 4 222 057**
**PATENT ABSTRACTS OF JAPAN, vol. 12, no.**
**57 (M-670), 20. Februar 1988 & JP-A-62204972**

(73) Patentinhaber : **ENDRESS + HAUSER**
**WETZER GmbH + Co. KG**
**Obere Wank 1**
**Postfach 1169**
**D-87481 Nesselwang (DE)**

(72) Erfinder : **Schmidt, Dieter, Dipl.-Ing.**
**Marsstrasse 21**
**D-87484 Nesselwang (DE)**

(74) Vertreter : **Morstadt, Volker, Dipl.-Ing. c/o**
**Endress + Hauser Flowtec AG**
**Kägenstrasse 7**
**Postfach 435**
**CH-4153 Reinach BL 1 (CH)**

## Beschreibung

Die Erfindung betrifft Kurvenschreibgeräte mit, vorzugsweise mehreren, Meßkanälen, bei denen gerade entstehende Teile von auf einem bewegten Aufzeichnungsträger erzeugten Meßkurven solange in einem Verdeckungsbereich liegen und daher unsichtbar sind, bis der Teil des Aufzeichnungsträgers mit den gerade entstehenden Teilen den Verdeckungsbereich verlassen hat.

Beispielsweise bei einem Kurvenschreibgerät mit einem sogenannten Thermokamm, dessen in einer Linie angeordnete, feststehende Heizelemente vom Meßsignal aktiviert werden und auf einem wärmeempfindlichen Registrierpapier (Thermopapier) als Aufzeichnungsträger eine Meßkurve erzeugen, sind die gerade entstehenden Teile vom Thermokamm verdeckt und daher unsichtbar.

Aber auch das Gehäuse von Kurvenschreibgeräten kann aus konstruktiven oder ästhetischen Gründen so ausgebildet sein, daß die gerade entstehenden Teile der Meßkurven hinter einem Verdeckungsbereich verschwinden und daher unsichtbar sind.

Die Ausbildung und die Anwendung von Thermokämmen bei Kurvenschreibgeräten sind an sich auch in der US-A 39 71 041 beschrieben.

Ein derartiges Kurvenschreibgerät mit Thermokamm ist z.B. auch das eigene, unter dem Gerätenamen "MEGA-LOG" produzierte und verkaufte Kurvenschreibgerät, bei dem ein bis sechs Meßkanäle für jeweils eines von sechs zu registrierenden Meßsignalen vorgesehen sind. Der Thermokamm besteht dabei aus einer Vielzahl längs der Papierbreite nebeneinander angeordneter, das Registierpapier dauernd berührender Punkt-Wärmequellen, denen zur Erzeugung der zu einem Meßkanal gehörenden Punktfolge pro Punkt ein kurzer Stromimpuls zugeführt wird.

In der JP-A 62-204 972 ist eine Schreibmaschine beschrieben, bei der die gerade auf der Tastatur geschriebenen und dadurch auf das Schreibpapier gedruckten Zeichen auch auf einem elektronischen alphanumerischen Anzeigedisplay zeilenweise sichtbar gemacht sind, um die vom Druckmechanismus oder anderen Teilen der Schreibmaschine momentan verdeckten Zeichen sofort sichtbar zu machen.

Hierbei handelt es sich also lediglich um die zusätzliche Sichtbarmachung von vom Schreiber bewußt und absichtlich erzeugten alphanumerischen Zeichen, deren Informationsinhalt er also bereits kennt.

Die gerade entstehenden Teile der oben erwähnten Punktfolgen von Kurvenschreibgeräten enthalten demgegenüber eine nichtalphanumerische, vom Betrachter noch nicht gekannte Information, die für ihn oft die interessanteste ist, z.B. darüber, ob oder wie schnell sich ein Meßsignal ändert, was für einen Trend es also zum Meßzeitpunkt und in dessen Nähe gerade nimmt. Diese u.U. sehr wichtige Information ist wegen der Verdeckung jedoch nur verzögert zugänglich.

Die der Erfindung zugrunde liegende Aufgabe besteht in der Behebung dieses Nachteils.

Eine erste Lösung ergibt sich nach Anspruch 1 durch ein Kurvenschreibgerät mit n (n = 1, 2, 3...) Meßkanälen für jeweils eines von n zu registrierenden Meßsignalen, mit einer Druckvorrichtung, die auf einem an ihr vorbeibewegten Aufzeichnungsträger n gleichfarbige, jeweils zu einem der n Meßsignale gehörende Punktfolgen als Meßkurven erzeugt, deren gerade entstehende Teile hinter einem von der Druckvorrichtung und/oder von anderen Komponenten des Kurvenmeßgeräts gebildeten Verdeckungsbereich liegen und unsichtbar sind, und mit einem elektronischen Anzeigedisplay mit p Zeilen zu je q Punkten, auf dem die gerade entstehenden Teile der Punktfolgen als entsprechende elektronische Punktfolgen angezeigt sind.

Eine zweite Lösung ergibt sich nach Anspruch 2 durch ein Kurvenschreibgerät mit m (m = 1, 2, 3...) Meßkanälen für jeweils eines von m zu registrierenden Meßsignalen, mit m Linienschreibvorrichtungen, die auf einem an ihnen vorbeibewegten Aufzeichnungsträger jeweils eine zu einem der m Meßsignale gehörende Linie als Meßkurven erzeugen, deren gerade entstehende Teile hinter einem von der Linienschreibvorrichtung und/oder von anderen Komponenten des Kurvenschreibgeräts gebildeten Verdeckungsbereich liegen und unsichtbar sind, und die senkrecht zur Bewegungsrichtung des Aufzeichnungsträgers in parallelen Führungen aneinander vorbei beweglich geführt sind, und mit einem elektronischen Anzeigedisplay mit p Zeilen zu je q Punkten, auf dem die gerade entstehenden Teile der Linien als entsprechende elektronische Punktfolgen zeitkorrigiert angezeigt sind.

Eine erste Weiterbildung der ersten Lösung hat 1 bis n Schreibvorrichtungen für 1 bis n verschiedene Farben, die eine oder mehrere der Punktfolgen mit einer dem Meßsignal des jeweiligen Kanals folgenden durchgehenden Linie einer anderen der n Farben mindestens stückweise überschreibt oder unterlegt.

Eine zweite Weiterbildung der ersten Lösung hat eine Farbdruckvorrichtung für 1 bis n verschiedene Farben, die ausgewählte Punkte jeder Meßkurve mit Farbpunkten einer anderen der n Farben markiert.

Diese beiden Weiterbildungen sind bei Kurvenschreibgeräten an sich in der eigenen EP-A 452 249 beschrieben.

Beide Lösungen der Erfindung und die beiden Weiterbildungen der ersten Lösung können jeweils dadurch bevorzugt ausgestaltet werden, daß die elektronischen Punktfolgen auf dem Anzeigedisplay in Form einer Hell/Dunkel- oder einer Dunkel/Hell-Grenze realisiert werden.

Beide Lösungen der Erfindung und die beiden Weiterbildungen der ersten Lösung können ferner jeweils durch eine derartige Fixierung des Anzeigedisplays am Verdeckungsbereich bevorzugt ausgestaltet werden, daß die sichtbaren Punktfolgen bzw. Linien durch mit deren gerade entstehenden Teilen kongruente elektronische Punktfolgen auf dem Anzeigedisplay fortgesetzt sind.

Eine Ausgestaltung und Weiterbildung der zweiten Lösung weist eine derartige Fixierung des Anzeigedisplays am Verdeckungsbereich auf, daß die sichtbaren Punktfolgen bzw. Linien durch mit deren gerade entstehenden Teilen kongruente elektronische Punktfolgen auf dem Anzeigedisplay fortgesetzt sind, und ferner mindestens einen elektronischen Zwischenspeicher, in dem den gerade entstehenden Teilen der Linien entsprechende Signale von mindestens einem Meßkanal und von einem weiteren, als Bezugskanal dienenden Meßkanal gespeichert und daraus dann zu derartigen Zeitpunkten für die Anzeige auf dem Anzeigedisplay wieder ausgelesen werden, daß die elektronischen Punktfolgen auf dem Anzeigedisplay einer gemeinsamen Zeitnullinie entspringen, die mit der des Bezugskanals kongruent ist.

Die Erfindung wird nun anhand von Ausführungsbeispielen unter Bezugnahme auf die Figuren der Zeichnung näher erläutert, in der gleiche Teile mit denselben Bezugszeichen versehen sind.

Fig. 1      zeigt einen für die Erfindung wesentlichen Ausschnitt eines Kurvenschreibgeräts mit Thermokamm,

Fig. 2      zeigt schematisch einen der Erläuterung des der Erfindung zugrunde liegenden Problems dienenden Ausschnitt von Fig. 1,

Fig. 3      zeigt schematisch die Frontansicht eines Kurvenschreibgeräts nach Fig. 1,

Fig. 4      zeigt schematisch die Frontansicht einer bevorzugten Ausgestaltung des Kurvenschreibgeräts nach Fig. 3,

Fig. 5      zeigt schematisch die Frontansicht einer Variante des Kurvenschreibgeräts nach Fig. 3,

Fig. 6      zeigt einen für die Erfindung wesentlichen Ausschnitt einer ersten Weiterbildung eines Kurvenschreibgeräts nach der Erfindung,

Fig. 7      zeigt einen für die Erfindung wesentlichen Ausschnitt einer zweiten Weiterbildung eines Kurvenschreibgeräts nach der Erfindung,

Fig. 8      zeigt einen für die Erfindung wesentlichen Ausschnitt eines Kurvenschreibgeräts mit Linienschreibvorrichtungen,

Fig. 9      zeigt schematisch die Frontansicht eines Kurvenschreibgeräts nach Fig. 8, und

Fig. 10      zeigt schematisch das Blockschaltbild der für die Erfindung wesentlichen elektronischen Teilschaltungen eines Kurvenschreibgeräts nach Fig. 8.

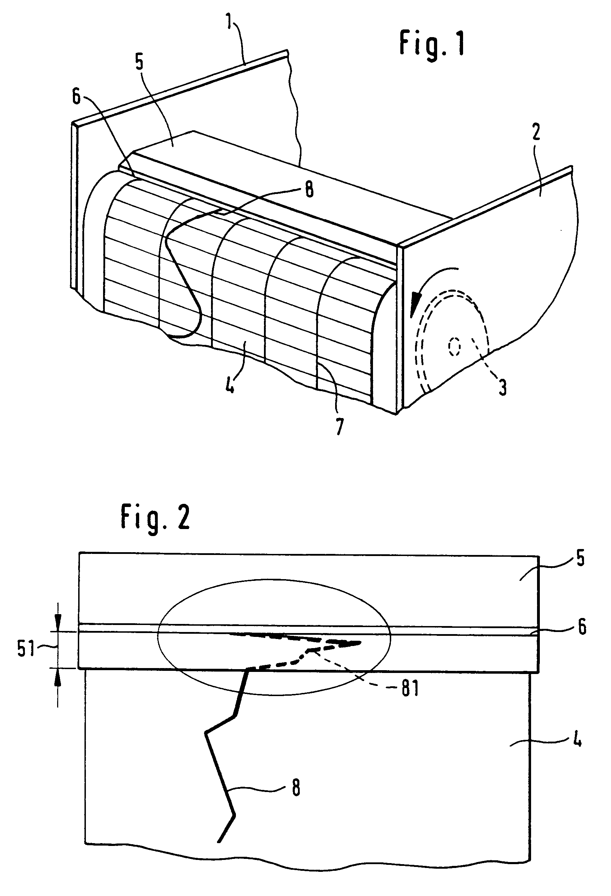

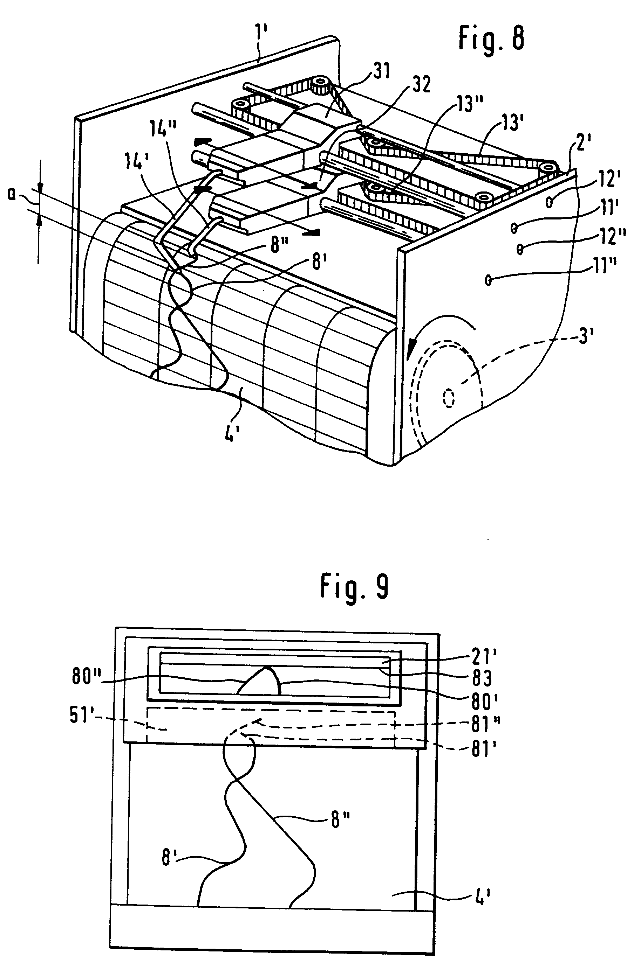

In den Fig. 1 bis 7 ist jeweils aus Gründen der zeichnerischen Übersichtlichkeit die Anwendung der Erfindung bei der Registrierung eines einzigen Meßsignals gezeigt; die eingangs erwähnte Laufzahl n ist hier also gleich eins. In Fig. 8 ist dagegen die Registrierung zweier Meßsignale gezeigt, die eingangs erwähnte Laufzahl m ist hier also gleich zwei. Ferner sind in den Figuren nur diejenigen Teile des Kurvenschreibgeräts ausschnittsweise dargestellt, die für die Erfindung und deren Verständnis wesentlich sind. In Fig. 8 sind außerdem die die Verdeckung bewirkenden Teile ebenfalls aus Übersichtlichkeitsgründen nicht zu sehen.

Das in Fig. 1 gezeigte Kurvenschreibgerät umfaßt zwei Seitenplatten 1, 2, zwischen denen die übrigen Teile untergebracht sind und die auch zu deren Lagerung und Halterung dienen. Hierzu gehört eine Druckwalze 3, über die hinweg ein Thermopapier als Aufzeichnungsträger 4 gezogen wird, z.B. dadurch, daß die Druckwalze 3 sich in Pfeilrichtung dreht. Oberhalb der Druckwalze 3 ist eine Druckvorrichtung 5 in Form eines oben erwähnten Thermokamms angebracht, dessen dicht nebeneinander liegende Punkt-Wärmequellen 6 in den Figuren als durchgehende Linie gezeichnet sind.

Die Druckvorrichtung 5 erzeugt auf dem Aufzeichnungsträger 4 sowohl ein Raster 7 als auch in Abhängigkeit von einem Meßsignal eine Punktfolge 8, deren Punkte in Fig. 1 so dicht liegen, daß sie als durchgehende Linie gezeigt sind.

Aus der stark schematisierten Fig. 2 wird das oben erläuterte Problem ersichtlich: Der Thermokamm nach Fig. 1 als Druckvorrichtung 5 hat zwischen der Linie der Punkt-Wärmequellen 6 und seiner Vorderkante, wo die Punktfolge 8 erstmals sichtbar wird, einen Verdeckungsbereich 51, hinter dem gerade entstehende Teile 81 der Meßkurve verborgen sind, vgl. die verdeutlichende Ellipse.

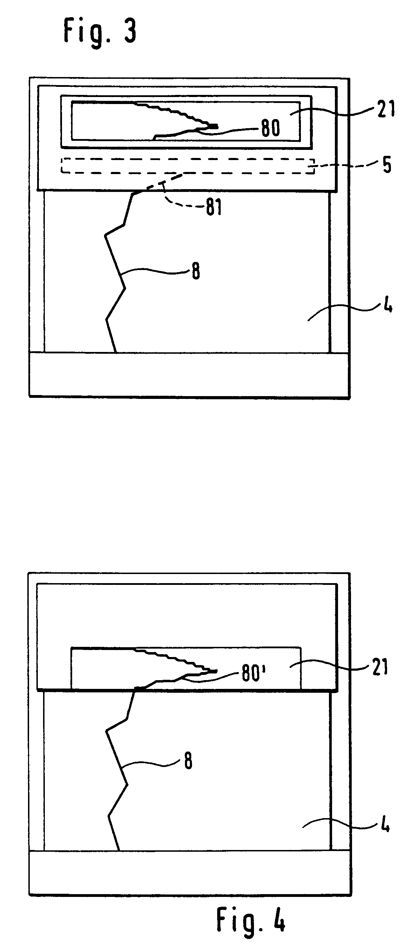

In der stark schematisierten Frontansicht der Fig. 3 ist der grundlegende Lösungsgedanke der Erfindung dargestellt. Es ist gezeigt, wie und daß die gerade entstehenden Teile 81 der Punktfolge 8 trotz deren Verdeckung wahrnehmbar gemacht sind: Es ist in der Figur oberhalb des Verdeckungsbereichs 51 ein Anzeigedisplay 21 mit p Zeilen zu je q Punkten fixiert, auf dem die gerade entstehenden Teile 81 der Punktfolge 8 als entsprechende, vorzugsweise kongruente, elektronische Punktfolge 80 angezeigt ist.

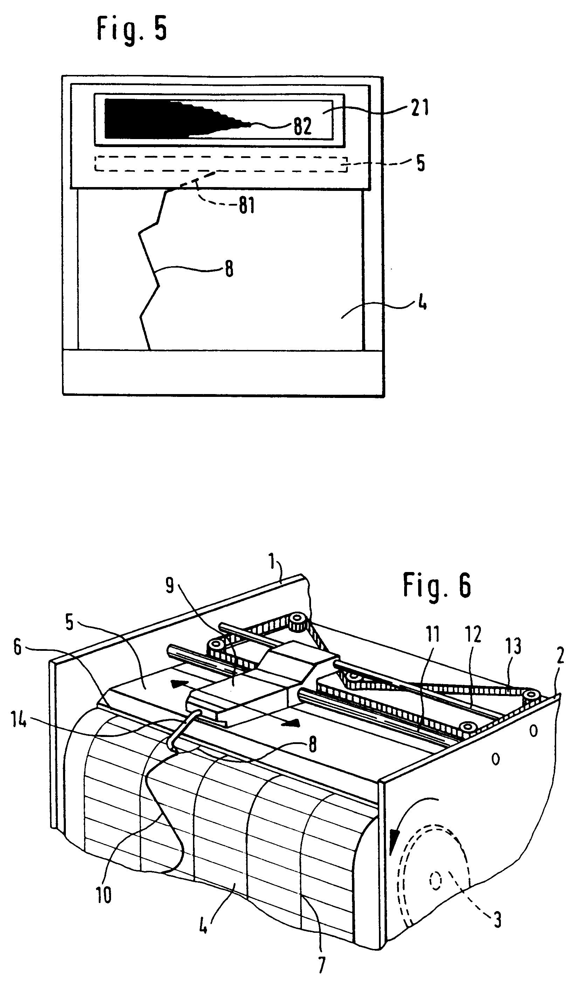

In der stark schematisierten Frontansicht der Fig. 4 ist eine bevorzugte Ausgestaltung des grundlegenden Lösungsgedankens der Erfindung dargestellt: Das Anzeigedisplay 21 ist am Verdeckungsbereich 51 so fixiert, daß die sichtbare Punktfolge 8 auf dem Anzeigedisplay 21 durch eine mit deren gerade entstehenden Teilen 81 kongruente elektronische Punktfolge 80' fortgesetzt ist.

Nach dem Ausführungsbeispiel der Fig. 5, die wiederum die stark schematisierte Frontansicht eines Kurvenschreibgeräts zeigt, ist die elektronische Punktfolge 80 bzw. 80' nach Fig. 3 bzw. Fig. 4 auf dem Anzeigedisplay 21 in Form einer Hell/Dunkel- oder einer Dunkel/Hell-Grenze 82 realisiert. Auf dem Anzeigedisplay 21 erscheint daher ein sich von links nach rechts erstreckender, entsprechend der Linienzahl p breiter dunkler Streifen nach Art eines sogenannten Bargraphs, dessen Dunkel/Hell-Grenze 82 die elektronische Punktfolge 80 darstellt. Im Bedarfsfall ist es selbstverständlich auch möglich, den dunklen Streifen im rechten Teil des Anzeigedisplays 21 vorzusehen.

Als Anzeigedisplays eignen sich besonders handelsübliche Flüssigkristall-Anzeigen (LCDs) oder Vakuum-Fluoreszenz-Anzeigen (VFDs), wie z.B. die zweizeilige, 20-stellige 5x7-Punkte-VFD mit der Nummer FIP20X2CA der Firma NEC. Es können natürlich auch alle anderen Arten von graphikfähigen Matrix-Anzeigen verwendet werden.

Bei dem in Fig. 6 gezeigten Ausschnitt einer ersten Weiterbildung eines entsprechend einer der Fig. 1 oder 3 bis 5 mit einem Anzeigedisplay ausgerüsteten Kurvenschreibgeräts, bei dem das Anzeigedisplay allerdings der Übersichtlichkeit wegen nicht dargestellt ist, ist eine von n Schreibvorrichtungen 9 für n verschiedene Farben vorgesehen, die die Punktfolge 8 mit einer durchgehenden Linie 10 in einer dieser Farben überschreibt oder unterlegt.

Durch den horizontalen Doppelpfeil ist angedeutet, daß die Schreibvorrichtung 9 über der gesamten Breite des Aufzeichnungsträgers 4 beweglich gelagert und mittels zweier Stangen 11, 12 geführt ist. Der horizontale Antrieb erfolgt über einen Zahnriemen 13, der über die gezeigten Zahnrollen geführt ist, von denen mindestens eine motorisch gedreht ist. Über den Aufzeichnungsträger 4 gleitet eine Schreibfeder 14, die mit einem Tintenreservoir verbunden ist, so daß die die Punktfolge 8 überschreibende Linie 10 deren Punkte verbindet.

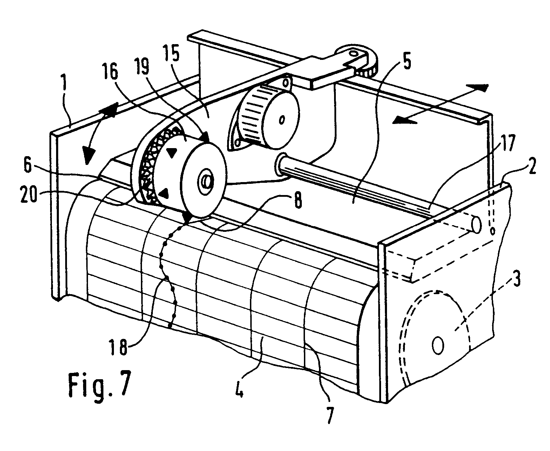

Bei dem in Fig. 7 gezeigten Ausschnitt einer zweiten Weiterbildung eines entsprechend einer der Fig. 1 oder 3 bis 5 mit einem Anzeigedisplay ausgerüsteten Kurvenschreibgeräts, bei dem das Anzeigedisplay allerdings der Übersichtlichkeit wegen wiederum nicht dargestellt ist, ist anstatt der Schreibvorrichtung 9 nach den Fig. 5 eine Farbdruckvorrichtung 15 vorgesehen. Sie umfaßt u.a. einen Druckstern 16 und ist um eine Achse 17 drehbar und darauf verschiebbar gelagert. Durch Hin- und Herbewegung kann der Druckstern 16 positioniert und dann auf den Aufzeichnungsträger 4 gesetzt und wieder davon abgehoben werden, so daß die Punktfolge 8, die wiederum von den Punkt-Wärmequellen 6 der Druckvorrichtung 5 erzeugt wird, mit Farbpunkten 18 markiert werden kann.

Auf der Umfangsfläche des Drucksterns 16 sind n Farbfedern 19 angeordnet, deren jede eine von denen der übrigen verschiedene Farbe abgibt. Ferner hat der Druckstern 16 einen Zahnkranz 20, über den die einzelne Farbfeder 19 in eine Lage gebracht werden kann, in der auf den Aufzeichnungsträger 4 die Farbpunkte 18 gesetzt werden. Diese Lage ist in Fig. 7 diejenige, in der eine der Farbfedern 19 sich senkrecht über dem Aufzeichnungsträger 4 befindet.

Nach diesen beiden Weiterbildungen lassen sich also die in der oben genannten EP-A 452 249 beschriebenen Kurvenschreibgeräte mit Farbunterscheidung der Punktfolgen auch mit dem Anzeigedisplay nach der Erfindung ausrüsten.

Das in Fig. 8 gezeigte Kurvenschreibgerät hat zwei Linienschreibvorrichtungen 31, 32; die obige Laufzahl m ist also hier gleich zwei. Es umfaßt zwei Seitenplatten 1', 2', zwischen denen die übrigen Teile untergebracht sind und die auch zu deren Lagerung und Halterung dienen. Hierzu gehört eine Druckwalze 3', über die hinweg z.B ein Rasterpapier oder ein Thermopapier als Aufzeichnungsträger 4'gezogen wird, z.B. dadurch, daß die Druckwalze 3' sich in Pfeilrichtung dreht.

Oberhalb der Druckwalze 3' sind die beiden Linienschreibvorrichtungen 31, 32 über der gesamten Breite des Aufzeichnungsträgers 4'aneinander vorbei bewegbar angeordnet, wie durch die beiden horizontalen Doppelpfeile angedeutet ist. Dies wird durch die jeweilige Führung auf zwei in den Seitenplatten 1', 2' fixierten Stangenpaaren mit je zwei parallelen Stangen 11', 12' bzw. 11", 12" erreicht.

Der horizontale Antrieb erfolgt über je einen Zahnriemen 13', 13", die jeweils über die gezeigten Zahnrollen geführt sind, von denen jeweils mindestens eine motorisch gedreht ist. Über den Aufzeichnungsträger 4' gleiten je eine Schreibfeder 14', 14", die mit je einem Tintenreservoir verbunden sind, so daß zu jedem der beiden Meßsignale eine Linie 8' bzw. 8" entsteht.

Bedingt durch den mechanischen Aufbau und insb. durch die freie Aneinander-Vorbei-Bewegbarkeit der Linienschreibvorrichtungen ergibt sich bei derartigen Kurvenschreibgeräten ein Ableseproblem insofern, als gleichen Zeitpunkten der Meßsignale entsprechende Registrierpunkte auf dem Aufzeichnungsträger nicht, wie es für optimales Ablesen praktisch wäre, eine einzige horizontale Bezugszeitlinie zugeordnet ist. Vielmehr haben die beiden Linien 8', 8" einen vertikalen Zeitoffset z, der ihrem Vertikalabstand a proportional und der Vorschubgeschwindigkeit v des Aufzeichnungsträgers umgekehrt proportional ist: $z = a/v$.

Die Anwendung des Anzeigedisplays nach der Erfindung ermöglicht es nun, diesen Zeitoffset zu korrigieren und auf dem Anzeigedisplay zu null zu machen, d.h. die m elektronischen Punktfolgen alle an einer gemeinsamen Zeitnullinie entspringen zu lassen.

Dies wird zunächst vom Ergebnis her aus Fig. 9 ersichtlich. In der stark schematisierten Frontansicht der Fig. 9 ist wie in Fig. 3 der grundlegende Lösungsgedanke der Erfindung, angewendet auf Linienschreibvorrichtungen nach Fig. 8, dargestellt. Es ist wieder gezeigt, in welcher Weise und daß die gerade entstehenden Teile 81′, 81″ der Linien 8′, 8″ trotz deren Verdeckung wahrnehmbar gemacht sind: Es ist in Fig. 9 oberhalb des Verdeckungsbereichs 51′ ein Anzeigedisplay 21′ mit p Zeilen zu je q Punkten fixiert, auf dem die gerade entstehenden Teile 81′, 81″ der Linien als entsprechende, vorzugsweise kongruente, elektronische Punktfolgen 80′, 80″ angezeigt sind, und zwar bezüglich der gemeinsamen Zeitnullinie 83 zeitkorrigiert.

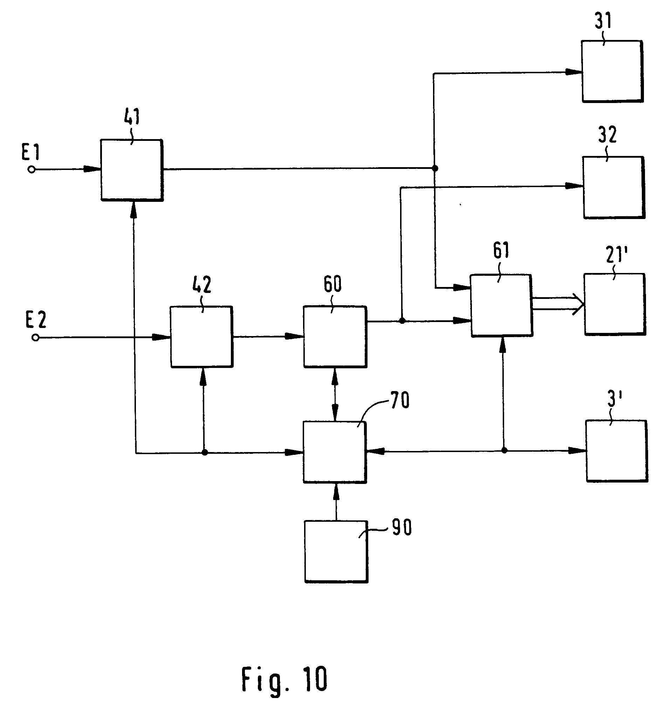

Diese Zeitkorrektur kann zweckmäßigerweise durch eine Schaltung realisiert werden, wie sie dem Prinzip nach in der US-A 42 22 057 beschrieben und in Fig. 10 als Blockschaltbild dargestellt ist, das für den Fall der in Fig. 9 beispielshalber vorausgesetzten zwei Meßkanäle gilt, jedoch für weitere Meßkanäle ohne weiteres entsprechend erweitert werden kann. Der jeweilige zur Linienschreibvorrichtung 31 bzw. 32 gehörende Meßkanal wird als der erste bzw. als der zweite bezeichnet. Das jeweilige von irgendeinem Sensor, z.B. einem Druck-, einem Temperatur-, einem Volumendurchfluß-, einem Massendurchfluß-, einem pH-Wert oder einem Gaskonzentrations-Sensor, stammende, i.a. analoge Signal ist dem jeweiligen Eingang E1 bzw. E2 des ersten bzw. zweiten Meßkanals zugeführt.

Nach jeweiliger Analog/Digital-Wandlung in Analog/Digital-Wandlern 41 bzw. 42 ist im ersten Meßkanal das analog/digital-gewandelte Signal der Linienschreibvorrichtung 31 unverzögert zugeführt. Im zweiten (und entsprechend jedem weiteren) Meßkanal dagegen ist das analog/digital-gewandelte Signal zunächst einem elektronischen Zwischenspeicher 60 zugeführt, worin es um den oben erwähnten Zeitoffset z verzögert wird. Erst nach dieser Verzögerungszeit wird es an die Linienschreibvorrichtung 32 gelegt.

Das (unverzögerte) Ausgangssignal des Analog/Digital-Wandlers 41 und das Ausgangssignal des Zwischenspeichers 60 liegen ferner am Eingang eines Codewandlers 61, der aus den digitalisierten und gegebenenfalls verzögerten Meßsignalen die für die Ansteuerung des Anzeigedisplays 21′ erforderlichen Signale erzeugt.

Die zeitliche Steuerung der Gesamtschaltung und die Anpassung an die oben erwähnte Vorschubgeschwindigkeit v des Aufzeichnungsträgers 4′ über eine Druckwalzen-Treiberschaltung 3″ erfolgt durch einen Mikroprozessors 70, dem ein Taktoszillator 90 zugeordnet ist.

Bei der Schaltung nach Fig. 10 ist vorausgesetzt, daß die Linienschreibvorrichtungen 31, 32 mit von Digitalsignalen direkt ansteuerbaren Schrittmotoren für die Hin- und Herbewegung entlang den parallelen Führungen 11′, 12′, 11″, 12″ ausgerüstet sind. In Fällen, in denen dafür Analogsignale benötigt werden, müssen die den Linienschreibvorrichtungen 31, 32 zuzuführenden Signale noch mittels entsprechender Digital/Analog-Wandler in Analogsignale rückgewandelt werden.

Durch den elektronischen Zwischenspeicher 60 läßt sich eine derartige Anzeige auf dem Anzeigedisplay 21′ erreichen, daß die elektronischen Punktfolgen 81′, 81″ der gemeinsamen Zeitnullinie 83 entspringen.

Wenn mehr als zwei Meßkanäle vorgesehen sind, ist es zweckmäßig, alle Ausgangssignale der Analog/Digital-Wandler dem Zwischenspeicher zuzuführen. Dann kann nämlich ein beliebiger Meßkanal zur Festlegung der Zeitnullinie herangezogen werden.

**Patentansprüche**

1. Kurvenschreibgerät
   - mit n (n = 1, 2, 3...) Meßkanälen für jeweils eines von n zu registrierenden Meßsignalen,
   - mit einer Druckvorrichtung (5),
     -- die auf einem an ihr vorbeibewegten Aufzeichnungsträger (4) n gleichfarbige, jeweils zu einem der n Meßsignale gehörende Punktfolgen (8) als Meßkurven erzeugt,
       --- deren gerade entstehende Teile (81) hinter einem von der Druckvorrichtung und/oder von anderen Komponenten des Kurvenschreibgeräts gebildeten Verdeckungsbereich (51) liegen und unsichtbar sind, und
   - mit einem elektronischen Anzeigedisplay (21) mit p Zeilen zu je q Punkten,
     -- auf dem die gerade entstehenden Teile der Punktfolgen als entsprechende elektronische Punktfolgen (80) angezeigt sind.

2. Kurvenschreibgerät
   - mit m (m = 1, 2, 3...) Meßkanälen für jeweils eines von m zu registrierenden Meßsignalen,

- mit m Linienschreibvorrichtungen (31, 32),

    -- die auf einem an ihnen vorbeibewegten Aufzeichnungsträger (4') jeweils eine zu einem der m Meßsignale gehörende Linie (8', 8") als Meßkurven erzeugen,

      --- deren gerade entstehende Teile hinter einem von den Linienschreibvorrichtungen und/oder von anderen Komponenten des Kurvenschreibgeräts gebildeten Verdeckungsbereich (51') liegen und unsichtbar sind, und

    -- die senkrecht zur Bewegungsrichtung des Aufzeichnungsträgers in parallelen Führungen (11', 12'; 11", 12") aneinander vorbei beweglich geführt sind, und

- mit einem elektronischen Anzeigedisplay (21') mit p Zeilen zu je q Punkten,

    -- auf dem die gerade entstehenden Teile der Linien als entsprechende elektronische Punktfolgen (80', 80") zeitkorrigiert angezeigt sind.

3. Kurvenschreibgerät nach Anspruch 1 mit 1 bis n Schreibvorrichtungen (9) für 1 bis n verschiedene Farben, die eine odere mehrere der Punktfolgen (8) mit einer dem Meßsignal des jeweiligen Kanals folgenden durchgehenden Linie (10) einer anderen der n Farben mindestens stückweise überschreiben oder unterlegen.

4. Kurvenschreibgerät nach Anspruch 1 mit einer Farbdruckvorrichtung (15) für 1 bis n verschiedene Farben, die ausgewählte Punkte jeder Meßkurve mit Farbpunkten (18) einer anderen der n Farben markiert.

5. Kurvenschreibgerät nach einem der Ansprüche 1 bis 4 mit Realisierung der elektronischen Punktfolgen auf dem Anzeigedisplay in Form einer Hell/Dunkel- oder einer Dunkel/Hell-Grenze.

6. Kurvenschreibgerät nach einem der Ansprüche 1 bis 4 mit einer derartigen Fixierung des Anzeigedisplays am Verdeckungsbereich, daß die sichtbaren Punktfolgen bzw. Linien auf dem Anzeigedisplay durch mit deren gerade entstehenden Teilen kongruente elektronische Punktfolgen fortgesetzt sind.

7. Kurvenschreibgerät nach Anspruch 2 mit

    - mindestens einem elektronischen Zwischenspeicher (60),

    -- in dem den gerade entstehenden Teilen (81', 81") der Linien (8', 8") entsprechende Signale von mindestens einem Meßkanal und von einem weiteren, als Bezugskanal dienenden Meßkanal gespeichert und daraus dann zu derartigen Zeitpunkten für die Anzeige auf dem Anzeigedisplay (21') wieder ausgelesen werden,

      --- daß die elektronischen Punktfolgen (80', 80") auf dem Anzeigedisplay (21') einer gemeinsamen Zeitnullinie (83) entspringen, die mit der des Bezugskanals kongruent ist.

## Claims

1. A chart recorder comprising

    - n (n = 1, 2, 3,...) measuring channels, one for each of n measurement signals to be recorded,

    - a printing device (5)

    -- which produces n equal-colored dot sequences (8), each associated with one of the n measurement signals, as measurement curves on a recording medium (4) moving past it,

      --- those portions (81) of the dot sequences which are currently being formed lying behind a covering portion (51) formed by the printing device and/or by other components of the chart recorder, and being invisible, and

    - an electronic display (21) with p lines each consisting of q dots

    -- on which the dot-sequence portions currently being formed are displayed as corresponding electronic dot sequences (80).

2. A chart recorder comprising

    - m (m = 1, 2, 3, ...) measuring channels, one for each of m measurement signals to be recorded,

    - m continuous-line recording devices (31, 32)

    -- which each produce a continuous line (8', 8") associated with one of the m measurement signals as a measurement curve on a recording medium (4') moving past them,

      --- those portions of the continuous lines which are currently being formed lying behind a covering portion (51') formed by the continuous-line recording devices and/or by other components of the chart recorder, and being invisible,

-- said continuous-line recording devices being movably guided past each other n parallel guides (11′, 12′; 11″, 12″) perpendicular to the direction of movement of the recording medium, and
- an electronic display (21′) with p lines each consisting of q dots
-- on which the continuous-line portions currently being formed are displayed in time-corrected form as corresponding electronic dot sequences (80′, 80″).

3. A chart recorder as claimed in claim 1, comprising 1 to n writing devices (9) for 1 to n different colors which overwrite or underwrite one or more of the dot sequences (8), at least in sections, with a continuous line (10) of another one of the n colors which follows the measurement signal of the respective channel.

4. A chart recorder as claimed in claim 1, comprising a color-printing device (15) for 1 to n different colors which marks selected dots of each measurement curve with dots (18) of another one of the n colors.

5. A chart recorder as claimed in any one of claims 1 to 4 wherein the electronic dot sequences on the display are implemented in the form of a light-dark or dark-light border.

6. A chart recorder as claimed in any one of claims 1 to 4 wherein the display is fixed to the covering portion in such a way that the visible dot sequences or lines are continued on the display by electronic dot sequences congruent with those portions of said dot sequences or lines which are currently being formed.

7. A chart recorder as claimed in claim 2, comprising
- at least one electronic buffer (60)
-- in which are stored signals from at least one measurement channel and from an additional measurement channel serving as a reference channel which correspond to the currently forming portions (81, 81′) of the lines (8′, 8″), and from which said signals are read for presentation on the display (21′) at such times
--- that the electronic dot sequences (80′, 80″) on the display (21′) originate from a common zero time line (83) which is congruent with that of the reference channel.

**Revendications**

1. Traceur de courbes, comprenant
- n (n = 1, 2, 3 ...) canaux de mesure pour respectivement un des n signaux de mesure à enregistrer,
- un dispositif d'impression (5) qui, sur un support d'enregistrement (4) se déplaçant devant lui, produit n séquences de points (8) d'une même couleur correspondant respectivement à un des n signaux de mesure, et représentant les courbes de mesure dont les parties en cours de formation (81) se trouvent derrière une zone masquée (51) formée par le dispositif d'impression et/ou par d'autres composants du traceur de courbes et sont invisibles, et
- un écran d'affichage électronique (21) comportant p lignes de q points chacune, sur lequel les parties en cours de formation des séquences de points sont affichées comme séquences de points électroniques (80) correspondantes.

2. Traceur de courbes, comprenant
- m (m = 1, 2, 3 ...) canaux de mesure pour respectivement un des m signaux de mesure à enregistrer,
- m traceurs de lignes (31, 32) qui, sur un support d'enregistrement (4′) se déplaçant devant eux produisent respectivement une ligne (8′, 8″) correspondant à un des m signaux de mesure, lesquelles lignes représentent les courbes de mesure dont les parties en cours de formation se trouvent derrière une zone masquée (51′) formée par les traceurs de lignes et/ou par d'autres composants du traceur de courbes et sont invisibles, les traceurs de lignes se déplaçant les uns devant les autres perpendiculairement au sens de déplacement du support d'enregistrement dans des guides parallèles (11′, 12′; 11″, 12″), et
- un écran d'affichage électronique (21′) comportant p lignes de q points chacune, sur lequel les parties en cours de formation des lignes sont affichées corrigées dans le temps comme séquences de points électroniques (80′, 80″) correspondantes.

3. Traceur de courbes selon la revendication 1, comportant 1 à n traceurs (9) pour 1 à n couleurs différentes, lesquels traceurs recouvrent d'une ligne continue (10) d'une couleur différente des n couleurs, et qui suit le signal de mesure du canal respectif, au moins partiellement une ou plusieurs séquences de points (8) ou se place en-dessous.

4. Traceur de courbes selon la revendication 1, comportant un dispositif d'impression en couleurs (15) pour 1 à n couleurs différentes, qui marque des points choisis de chaque courbe de mesure de points de couleur (18) d'une couleur différente des n couleurs.

5. Traceur de courbes selon l'une des revendications 1 à 4, permettant une visualisation des séquences de points électroniques sur l'écran d'affichage sous forme d'une zone claire-obscure ou d'une zone obscure-claire.

6. Traceur de courbes selon l'une des revendications 1 à 4, dont l'écran d'affichage est fixé sur la zone masquée de telle sorte que les séquences de points ou de lignes visibles sur l'écran d'affichage se prolongent par des séquences de points électroniques congruentes avec les parties en cours de formation de ces séquences de points ou de lignes.

7. Traceur de courbes selon la revendication 2, comportant
   - au moins une mémoire tampon électronique (60), dans laquelle des signaux correspondant aux parties en cours de formation (81', 81'') des lignes (8', 8''), et émis par au moins un canal de mesure et par un autre canal de mesure servant de canal de référence, sont mémorisés, et sont à nouveau extraits pour être affichés à l'écran d'affichage (21'), à des instants tels que les séquences de points électroniques (80', 80'') sur l'écran d'affichage (21') naissent d'une ligne de zéro temporelle commune (83) qui est congruente avec celle du canal de référence.

Fig. 1

Fig. 2

# Fig. 3

# Fig. 4

# Fig. 5

# Fig. 6

Fig. 7

Fig. 8

Fig. 9

Fig. 10